# EUROPEAN PATENT APPLICATION

(11) **EP 3 546 998 A1**
(43) Date of publication of application: **02.10.2019**
(21) Application number: 17874148.4
(22) Date of filing: 20.11.2017
(51) Int. Cl.: G02B 6/42, H01L 31/02

(54) **OPTICAL MODULE AND MANUFACTURING METHOD FOR OPTICAL MODULE**

(30) Priority: 28.11.2016 JP 2016230349
(71) Applicant: Enplas Corporation, Kawaguchi-shi, Saitama 332-0034 (JP)
(72) Inventor: MORIOKA, Shimpei, Kawaguchi-shi, Saitama 332-0034 (JP); TSUGA, Hisafumi, Kawaguchi-shi, Saitama 332-0034 (JP)
(74) Representative: Epping - Hermann - Fischer
(86) International application number: PCT/JP2017/041583
(87) International publication number: WO 2018/097072

(57) **Abstract**

Provided is an optical module having a substrate, a photoelectric conversion element, an optical receptacle, a support member, and a ferrule. The optical receptacle optically couples the photoelectric conversion element disposed on the substrate and an end face of a light transmission body. The support member supports the optical receptacle in a state where the substrate and the optical receptacle are separated from each other. The ferrule is bonded to the support member in a state where the ferrule is separated from a surface of the optical receptacle on which the optical surface opposing the ferrule is disposed, and the ferrule is not bonded to the optical receptacle.

## Description

### Technical Field

The present invention relates to an optical module and a method for producing the optical module.

### Background Art

Conventionally, in optical communications using an optical transmission member such as an optical fiber, an optical waveguide, and/or the like, an optical module including a light-emitting element (hereinafter, also referred to as "optical element") such as a surface-emitting laser (e.g., a vertical cavity surface emitting laser (VCSEL)) has been used. Such an optical module includes an optical receptacle (hereinafter, also referred to as "optical socket") that allows, to enter the optical transmission member, light containing communication information and being emitted by the light-emitting element (see, e.g., Patent Literature (hereinafter referred to as "PTL") 1).

An optical module disclosed in PTL 1 includes a transparent substrate, an optical socket that is disposed on one surface of the transparent substrate and that is for optically coupling together an optical element and an end surface of an optical transmission member, and the optical element disposed on the other surface of the transparent substrate at a position corresponding to the optical socket. The optical socket and the optical element are adhered directly to the transparent substrate. An optical plug provided at one end of the optical transmission member is attached to the optical socket. In the optical module disclosed in PTL 1, the light-emitting surface of the optical element faces the transparent substrate, so that inconvenience such as damage to the light-emitting surface, adhesion of an extraneous matter to the light-emitting surface, and/or the like can be reduced.

### Citation List

### Patent Literature

PTL 1
Japanese Patent Application Laid-Open No. 2004-246279

### Summary of Invention

### Technical Problem

However, in the optical module disclosed in PTL 1, there has been a problem in that, since the optical socket is directly adhered to the substrate, a region of the substrate for wire bonding and a region of the substrate for other optical components, electronic components, and/or the like to be disposed are restricted. Since the optical plug provided at one end of the optical transmission member is directly attached to the optical socket, stresses caused during attachment or detachment of the optical transmission member or during use of the optical module may be transmitted to the optical socket via the optical plug. Such stresses result in another problem in that the position of the optical socket shifts or the optical socket comes off.

An object of the present invention is to provide an optical module in which a region of a substrate for wire bonding and a region of the substrate for other optical components, electronic components, and/or the like to be disposed are secured so that the design flexibility increases, and in which it is unlikely for the position of an optical receptacle to shift or for the optical receptacle to come off by stresses caused during attachment or detachment of an optical transmission member or during use of the optical module.

### Solution to Problem

An optical module according to the present invention is an optical module for transmitting light to an end surface of an optical transmission member and/or for receiving light from the end surface of the optical transmission member, the optical module including: a substrate; a photoelectric conversion element disposed on the substrate; an optical receptacle for optically coupling the photoelectric conversion element and the end surface of the optical transmission member; a supporting member that supports the optical receptacle in a state where the substrate and the optical receptacle are spaced apart from each other; and a ferrule for holding the optical transmission member. The optical receptacle includes: a first optical surface that allows incidence of transmission light emitted by the photoelectric conversion element, or emits, toward the photoelectric conversion element, reception light that has been emitted from the end surface of the optical transmission member and has passed through an inside of the optical receptacle, and a second optical surface that emits, toward the optical transmission member, the transmission light that has been emitted by the photoelectric conversion element and has passed through the inside of the optical receptacle, or allows incidence of the reception light emitted from the optical transmission member. The ferrule is adhered to the supporting member but is not adhered to the optical receptacle, the ferrule being adhered to the supporting member to be spaced apart from a surface of the optical receptacle on which the second optical surface is disposed.

A method for producing the optical module according to the present invention includes: fixing the optical receptacle and the supporting member to each other; fixing the supporting member to which the optical receptacle is fixed and the substrate to each other in a state where the substrate and the optical receptacle are spaced apart from each other; and adhering the supporting member and the ferrule to each other without adhering the optical receptacle and the ferrule to each other in a state where the surface of the optical receptacle on which the second optical surface is disposed and the ferrule are not in contact with each other.

### Advantageous Effects of Invention

According to the present invention, it is possible to provide an optical module in which a region of a substrate for wire bonding and a region of the substrate for other optical components, electronic components, and/or the like to be disposed are secured so that the design flexibility increases, and in which it is unlikely for the position of an optical receptacle to shift or for the optical receptacle to come off by stresses caused during attachment or detachment of an optical transmission member or during use of the optical module.

### Brief Description of Drawings

FIGS. 1A and 1B illustrate a configuration of an optical module according to an embodiment of the present invention;
FIGS. 2A to 2D illustrate a configuration of an optical receptacle;
FIGS. 3A to 3D illustrate a configuration of a supporting member;
FIGS. 4A to 4D illustrate a configuration of a ferrule;
FIG. 5 shows a graph illustrating a relationship between optical coupling efficiency and shift amount (z) of a focusing position of light emitted from second optical surfaces with respect to end surfaces of optical transmission members in the optical module;
FIGS. 6A and 6B illustrate a configuration of an optical module according to Modification 1; and
FIGS. 7A and 7B illustrate a configuration of an optical module according to Modification 2.

### Description of Embodiments

Hereinafter, optical module 100 according to an embodiment of the present invention will be described in detail with reference to the attached drawings.

### [Configuration of Optical Module]

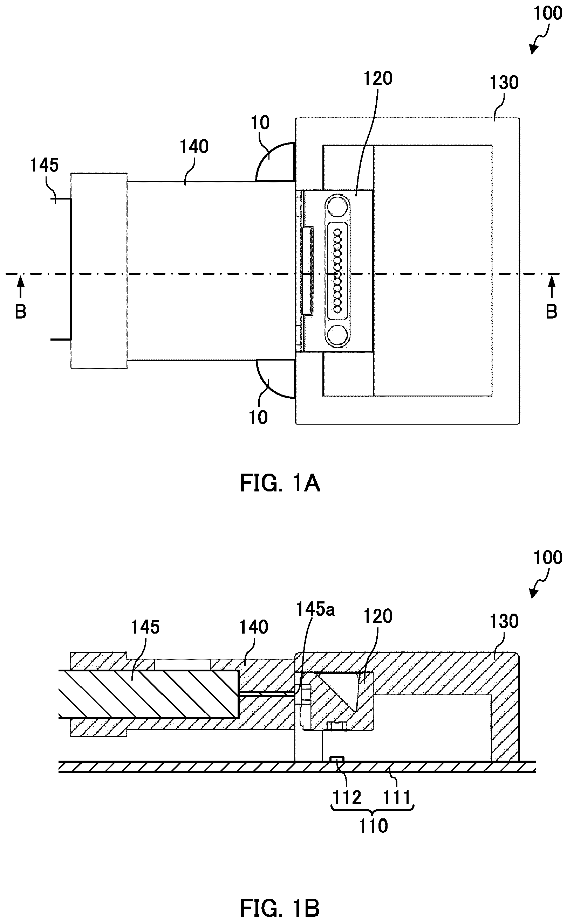

FIGS. 1A and 1B illustrate a configuration of optical module 100 according to an embodiment of the present invention. FIG. 1A is a bottom view of optical module 100 as seen from the side of substrate 111, and FIG. 1B is a sectional view of optical module 100 taken along in line B-B in FIG. 1A. Note that, illustration of photoelectric conversion device 110 is omitted in FIG. 1A.

Optical module 100 includes photoelectric conversion device 110, optical receptacle 120, supporting member 130, and ferrule 140 as illustrated in FIGS. 1A and 1B. Optical module 100 is used in a state where optical transmission members 145 are held in ferrule 140.

### (Photoelectric Conversion Device)

Photoelectric conversion device 110 converts between an optical signal and an electrical signal in optical module 100. Photoelectric conversion device 110 includes substrate 111 and photoelectric conversion element 112.

Substrate 111 supports photoelectric conversion element 112 and supporting member 130. Examples of substrate 111 include a glass composite substrate, glass epoxy substrate, and flexible printed circuit board.

Photoelectric conversion element 112 is disposed on substrate 111. Photoelectric conversion element 112 is a light-emitting element or a light-receiving element. In optical module 100 for transmission, the light-emitting element is used as photoelectric conversion element 112. In optical module 100 for reception, the light-receiving element is used as photoelectric conversion element 112. In optical module 100 for transmission and reception, the light-emitting element and the light-receiving element are used as the photoelectric conversion elements 112. Optical module 100 according to the present embodiment is an optical module for transmission and reception that is for both of transmission of light to end surfaces 145a of optical transmission members 145 and reception of light from end surfaces 145a of optical transmission members 145. That is, photoelectric conversion device 110 includes the light-emitting element and the light-receiving element as photoelectric conversion elements 112.

The light-emitting element emits light in a direction vertical to (i.e., in a direction of the normal to) the surface of substrate 111 on which the light-emitting element is disposed. The number of light-emitting elements is not limited specifically, but may be appropriately set as needed. For example, the number of light-emitting elements is four, six, eight, or twelve. Six light-emitting elements are provided in the present embodiment. The light-emitting elements are disposed on substrate 111 at positions where the light-emitting elements face first optical surfaces 121 (described later) of optical receptacle 120. The six light-emitting elements are arranged at regular intervals in the arrangement direction in which first optical surfaces 121 and optical transmission members 145 are arranged (the arrangement direction is the depth direction of the drawing sheet of FIG. 1B). More specifically, the six light-emitting elements are arranged to be located on the same straight line. Note that, when the optical transmission members are arranged in two or more rows, the number of rows of the arranged light-emitting elements may be identical to that of the optical transmission members. Examples of the light-emitting elements include a vertical cavity surface emitting laser (VCSEL).

The light-receiving element receives reception light emitted from end surfaces 145a of optical transmission members 145. The number of light-receiving elements is also not limited specifically, but may be appropriately set as needed. For example, the number of light-receiving elements is four, six, eight, or twelve. Six light-receiving elements are provided in the present embodiment. The light-receiving elements are also disposed at positions where the light-receiving elements face first optical surfaces 121 of optical receptacle 120. The six light-receiving elements are arranged at regular intervals in the arrangement direction in which first optical surfaces 121 and optical transmission members 145 are arranged (the arrangement direction is the depth direction of the drawing sheet of FIG. 1B) in the present embodiment. More specifically, the six light-receiving elements are arranged to be located on the same straight line. Note that, when the optical transmission members are arranged in two or more rows, the number of rows of the arranged light-receiving elements may be identical to that of the optical transmission members. The light-receiving elements are, for example, a photodiode.

### (Optical Receptacle)

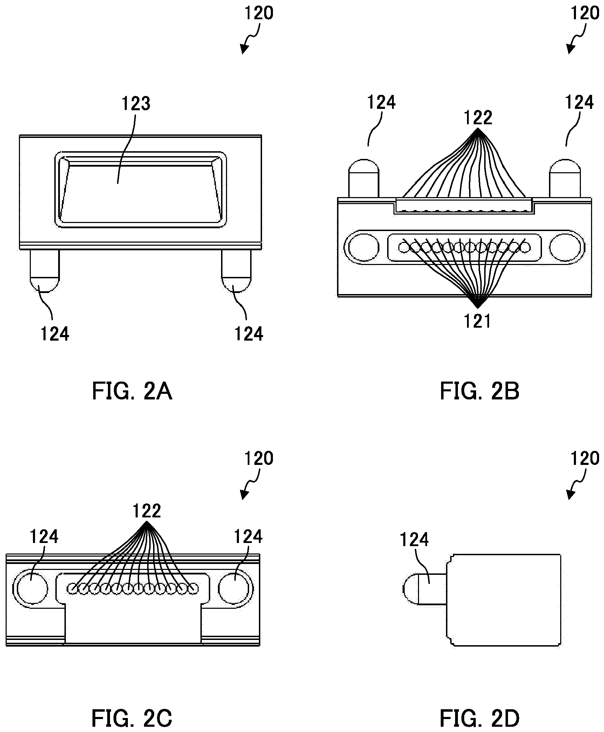

FIGS. 2A to 2D illustrate the configuration of optical receptacle 120. FIG. 2A is a plan view of optical receptacle 120, FIG. 2B is a bottom view of optical receptacle 120, FIG. 2C is a front view of optical receptacle 120, and FIG. 2D is a right side view of optical receptacle 120. Note that, hereinafter, descriptions will be given in which a surface of optical receptacle 120 facing ferrule 140 is regarded as the front surface of optical receptacle 120.

Optical receptacle 120 optically couples together photoelectric conversion elements 112 and end surfaces 145a of optical transmission members 145 when disposed between photoelectric conversion device 110 and ferrule 140. In the present embodiment, optical receptacle 120 optically couples together the six light-emitting elements and end surfaces 145a of six optical transmission members 145, respectively, and also optically couples together the six light-receiving elements and end surfaces 145a of six optical transmission members 145, respectively.

As illustrated in FIGS. 2A to 2D, optical receptacle 120 is a member having a substantially rectangular parallelepiped shape. Optical receptacle 120 is optically transparent. Optical receptacle 120 allows the transmission light emitted by the light-emitting elements to be emitted toward end surfaces 145a of optical transmission members 145 and also allows the reception light emitted from end surfaces 145a of optical transmission members 145 to be emitted toward the light-receiving elements. Optical receptacle 120 is formed using a material optically transparent to the light of wavelengths used for optical communications (transmission light and reception light). Examples of the material of optical receptacle 120 include polyetherimide (PEI) and cyclic olefin resin.

Optical receptacle 120 includes twelve first optical surfaces 121, twelve second optical surfaces 122, reflective surface 123, and two ferrule protrusions 124. The right half of optical receptacle 120 in each of FIGS. 2A to 2C functions as an optical module for transmission, and the left half of optical receptacle 120 in each of FIGS. 2A to 2C functions as an optical module for reception.

First optical surfaces 121 are optical surfaces which allow, to enter the inside of optical receptacle 120, the transmission light emitted by the light-emitting elements. First optical surfaces 121 are also optical surfaces which allow, to be emitted toward the light-receiving elements, the reception light emitted from end surfaces 145a of optical transmission members 145 and having passed through the inside of optical receptacle 120.

As for the shape of first optical surfaces 121, first optical surfaces 121 are convex lens surfaces that are convex toward photoelectric conversion elements 112 in the present embodiment. First optical surfaces 121 convert, into collimated light, the transmission light emitted by the light-emitting elements. First optical surfaces 121 converge the reception light emitted from optical transmission members 145 and having passed through the inside of optical receptacle 120. Additionally, each of first optical surfaces 121 is circular in plan view.

Twelve first optical surfaces 121 are provided in the present embodiment. First optical surfaces 121 are disposed on the bottom surface of a recess formed in the bottom surface of optical receptacle 120. Twelve first optical surfaces 121 are arranged in the arrangement direction in which photoelectric conversion elements 112 (six light-emitting elements and six light-receiving elements) are arranged, so as to face twelve photoelectric conversion elements 112, respectively. It is preferable that the central axes (optical axes) of first optical surfaces 121 be orthogonal to the photoelectric conversion surfaces of photoelectric conversion elements 112, respectively. It is also preferable that the central axes (optical axes) of first optical surfaces 121 coincide with the optical axis of the transmission light emitted by the light-emitting elements and with the optical axis of the reception light incident on the light-receiving elements. Note that, when photoelectric conversion elements 112 and optical transmission members 145 are arranged in two or more rows, the number of rows of arranged first optical surfaces 121 is identical to those of photoelectric conversion elements 112 and optical transmission members 145.

In the present embodiment, six of twelve first optical surfaces 121 on the right side in FIG. 2B are used as first optical surfaces 121 for transmission, and six of twelve first optical surfaces 121 on the left side are used as first optical surfaces 121 for reception. The transmission light from the light-emitting elements is incident on first optical surfaces 121 for transmission to enter the inside of optical receptacle 120, and the reception light having passed through the inside of optical receptacle 120 is emitted from first optical surfaces 121 for reception.

Second optical surfaces 122 are optical surfaces which allow, to be emitted toward end surfaces 145a of optical transmission members 145, the transmission light emitted by the light-emitting elements and having passed through the inside of optical receptacle 120. Second optical surfaces 122 are also optical surfaces which allow, to enter the inside of optical receptacle 120, the reception light emitted from end surfaces 145a of optical transmission members 145.

As for the shape of second optical surfaces 122, second optical surfaces 122 are convex lens surfaces that are convex toward end surfaces 145a of optical transmission members 145 in the present embodiment. Second optical surfaces 122 converge the transmission light having passed through the inside of optical receptacle 120 toward end surfaces 145a of optical transmission members 145. Second optical surfaces 122 also convert, into collimated light, the reception light emitted from end surfaces 145a of optical transmission members 145. Additionally, each of second optical surfaces 122 is circular in plan view.

Twelve second optical surfaces 122 are provided in the present embodiment. Second optical surfaces 122 are disposed on the bottom surface of a recess formed in the front surface of optical receptacle 120. Twelve second optical surfaces 122 are arranged in the arrangement direction in which optical transmission members 145 are arranged, so as to face end surfaces 145a of twelve optical transmission members 145, respectively. It is preferable that the central axes (optical axes) of second optical surfaces 122 be orthogonal to end surfaces 145a of optical transmission members 145. It is also preferable that the central axes (optical axes) of second optical surfaces 122 coincide with the optical axis of the reception light emitted from optical transmission members 145 and with the optical axis of the transmission light entering optical transmission members 145. Note that, when photoelectric conversion elements 112 and optical transmission members 145 are arranged in two or more rows, the number of rows of arranged second optical surfaces 122 is identical to those of photoelectric conversion elements 112 and optical transmission members 145.

In the present embodiment, six of twelve second optical surfaces 122 on the right side in FIG. 2C are used as second optical surfaces 122 for transmission, and six of twelve second optical surfaces 122 on the left side are used as second optical surfaces 122 for reception. The transmission light having passed through the inside of optical receptacle 120 is emitted from second optical surfaces 122 for transmission, and the reception light from optical transmission members 145 is incident on second optical surfaces 122 for reception to enter the inside of optical receptacle 120.

Reflective surface 123 reflects, toward second optical surfaces 122, the transmission light incident on first optical surfaces 121 and having entered the inside of optical receptacle 120. Reflective surface 123 also reflects, toward first optical surfaces 121, the reception light incident on second optical surfaces 122 and having entered the inside of optical receptacle 120.

Reflective surface 123 is a part of the inner surface of a recess formed in the top surface of optical receptacle 120. In the present embodiment, reflective surface 123 is inclined such that a distance from reflective surface 123 to second optical surfaces 122 (or optical transmission members 145) increases with increasing distance from the top surface to the bottom surface of optical receptacle 120. The inclination angle of reflective surface 123 is 45 degrees with respect to the optical axes of first optical surfaces 121 and with respect to the optical axes of second optical surfaces 122.

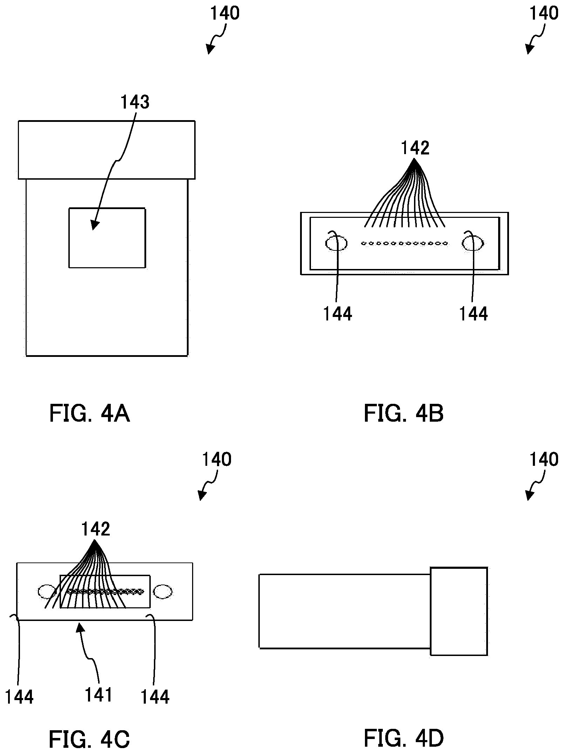

Ferrule protrusions 124 are fitted in optical-receptacle through holes 144 formed in ferrule 140 (see FIGS. 4B and 4C). The relative position of optical transmission members 145 with respect to optical receptacle 120 in the in-plane direction of the front surface of optical receptacle 120 may thus be determined. The positions, shape, size, and number of ferrule protrusions 124 are not limited specifically as long as the above-described function can be ensured, and the positions, shape, size, and number of ferrule protrusions 124 correspond respectively to the positions, shape, size, and number of optical-receptacle through holes 144 of ferrule 140. Two ferrule protrusions 124 are provided in the present embodiment. Two ferrule protrusions 124 are disposed on the front surface of optical receptacle 120. Ferrule protrusions 124 are disposed at the opposite sides of a row of second optical surfaces 122 along the arrangement direction in which second optical surfaces 122 are disposed in the present embodiment. Ferrule protrusions 124 have a cylindrical shape having a hemispherical front end.

### (Supporting Member)

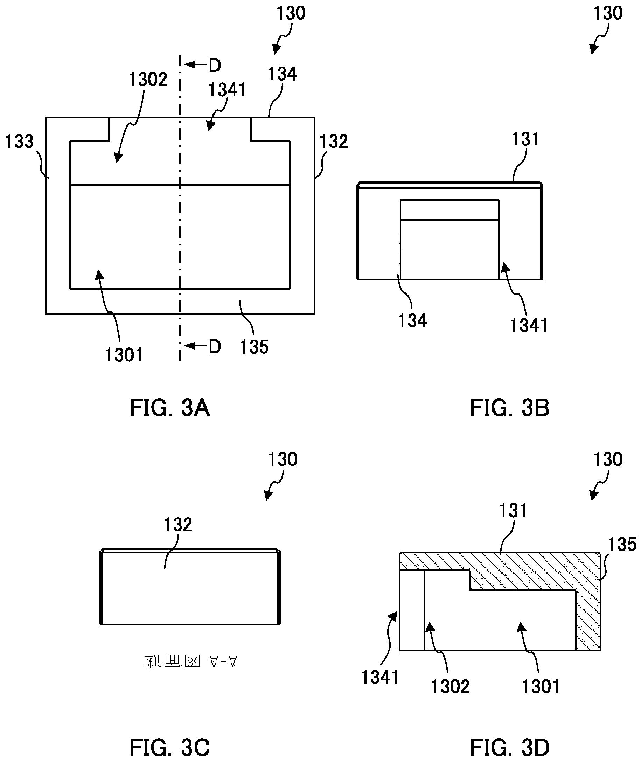

FIGS. 3A to 3D illustrate a configuration of supporting member 130. FIG. 3A is a bottom view of supporting member 130, FIG. 3B is a front view of supporting member 130, FIG. 3C is a right side view of supporting member 130, and FIG. 3D is a sectional view of supporting member 130 taken along line D-D in FIG. 3A. Note that, hereinafter, descriptions will be given in which a surface of supporting member 130 facing ferrule 140 is regarded as the front surface of supporting member 130.

As illustrated in FIG. 1B, supporting member 130 supports optical receptacle 120 in a state where substrate 111 and optical receptacle 120 are spaced apart from each other. The shape and the size of supporting member 130 are not limited specifically as long as supporting member 130 can exhibit the above-described function without hindering the travel of light passing through an optical path between photoelectric conversion elements 112 and optical transmission members 145. Supporting member 130 supports optical receptacle 120 in a recess formed in the bottom surface of supporting member 130 in the present embodiment.

Supporting member 130 includes top plate 131, right side plate 132, left side plate 133, front plate 134, and rear plate 135 in the present embodiment. Members constituting supporting member 130 may be integrally formed, or may also be formed as separate members. The members constituting supporting member 130 are integrally formed in the present embodiment.

One surface of top plate 131 (inner surface of supporting member 130) faces the top surface of optical receptacle 120. A stepped portion is formed on the one surface of top plate 131. A stepped surface of the stepped portion disposed between an upper step surface and a lower step surface functions as a positioning part (described later) for determining the position of optical receptacle 120 in supporting member 130. The aforementioned one surface of top plate 131 and the top surface of optical receptacle 120 are in contact with each other in the present embodiment.

One surface of right side plate 132 (inner surface of supporting member 130) faces a part of the right side surface of optical receptacle 120. This one surface of right side plate 132 and the right side surface of optical receptacle 120 may be in contact with each other, or may be spaced apart from each other. This one surface of right side plate 132 and the right side surface of optical receptacle 120 paired with each other are spaced apart from each other in the present embodiment.

One surface of left side plate 133 (inner surface of supporting member 130) faces a part of the left side surface of optical receptacle 120. This one surface of left side plate 133 and the left side surface of optical receptacle 120 may be in contact with each other, or may be spaced apart from each other. This one surface of left side plate 133 and the left side surface of optical receptacle 120 paired with each other are spaced apart from each other in the present embodiment.

Opening 1341 is formed in front plate 134. As for a pair of opposed surfaces of front plate 134 facing each other across opening 1341 in the direction in which right side plate 132 and left side plate 133 faces each other, these opposed surfaces face the other part of the right side surface of optical receptacle 120 and the other part of the left side surface of optical receptacle 120, respectively. In addition, one surface of front plate 134 (outer surface of supporting member 130) faces a part of the front surface of ferrule 140. The aforementioned pair of opposed surfaces may be in contact with or spaced apart from the right side surface and left side surface of optical receptacle 120, respectively. The aforementioned pair of opposed surfaces are in contact respectively with the right side surface and left side surface of optical receptacle 120 in the present embodiment.

As described above, supporting member 130 includes opening 1341 that is open in a surface of supporting member 130 facing ferrule 140 (outer surface of front plate 134). Ferrule 140 is larger than opening 1341 at least in one direction orthogonal to the optical axes of second optical surfaces 122. Ferrule 140 is larger than opening 1341 in the width direction of opening 1341 (in the direction in which right side plate 132 and left side plate 133 face each other) in the present embodiment. Ferrule 140 thus does not touch the surface (front surface) of optical receptacle 120 on which second optical surfaces 122 are disposed, when ferrule 140 and supporting member 130 are adhered to each other.

One surface of rear plate 135 (inner surface of supporting member 130) faces a part of the rear surface of optical receptacle 120. This one surface of rear plate 135 and the rear surface of optical receptacle 120 may be in contact with each other, or may be spaced apart from each other. This one surface of rear plate 135 and the rear surface of optical receptacle 120 are spaced apart from each other in the present embodiment.

The lower surfaces (bottom surfaces) of right side plate 132, left side plate 133, front plate 134, and rear plate 135 function as an installation surface for supporting member 130 to be installed on substrate 111. The lengths of right side plate 132, left side plate 133, front plate 134, and rear plate 135 in their height direction are the same as one another in the present embodiment. The lengths of right side plate 132, left side plate 133, front plate 134, and rear plate 135 in their height direction are greater than the height of optical receptacle 120. When supporting member 130 is disposed on substrate 111, optical receptacle 120 may thus be supported by supporting member 130 to be spaced apart from substrate 111 (from the aforementioned installation surface). In other words, a space is formed between optical receptacle 120 and substrate 111 in optical module 100.

First recess 1301 and second recess 1302 are formed in supporting member 130. First recess 1301 and second recess 1302 are spaces defined by top plate 131, right side plate 132, left side plate 133, front plate 134, and rear plate 135. First recess 1301 is a recess that is of a quadrangular prism shape and that is open in the bottom surface of supporting member 130. Second recess 1302 is a prismatic recess that is open in the bottom surface and front surface of supporting member 130. The depth of second recess 1302 is greater than the depth of first recess 1301.

It is preferable that supporting member 130 include the positioning part for determining the position of optical receptacle 120. The position, shape, size, and number of positioning parts are not limited specifically as long as the positioning part can exhibit the aforementioned function. The positioning part may be a positioning structure formed in supporting member 130 and having a predetermined shape, or may also be an alignment mark indicated on supporting member 130, for example.

Supporting member 130 includes second recess 1302 as the positioning part in the present embodiment. The positioning part (second recess 1302) is composed of top plate 131 and front plate 134. The inner surface of second recess 1302 is in contact with the right side surface, left side surface, and rear surface of optical receptacle 120. More specifically, the pair of opposed surfaces of front plate 134 facing each other across opening 1341 is in contact with the right side surface and left side surface of optical receptacle 120, and the stepped surface of the stepped portion formed on top plate 131 is in contact with the rear surface of optical receptacle 120. The position of optical receptacle 120 supported by supporting member 130 may thus be determined.

Supporting member 130 may be formed of an optically-transparent or optically-untransparent material. Examples of the material of supporting member 130 include polycarbonate (PC), polyether imide (PEI), and polyether sulfone (PES).

### (Ferrule)

FIGS. 4A to 4D illustrate a configuration of ferrule 140. FIG. 4A is a plan view of ferrule 140, FIG. 4B is a front view of ferrule 140, FIG. 4C is a rear view of ferrule 140, and FIG. 4D is a right side view of ferrule 140. Note that, hereinafter, descriptions will be given in which a surface of ferrule 140 facing supporting member 130 is regarded as the front surface of ferrule 140.

Ferrule 140 holds optical transmission members 145, and determines the relative position of end surfaces 145a of optical transmission members 145 held by ferrule 140 with respect to second optical surfaces 122 of optical receptacle 120. Ferrule 140 is adhered to supporting member 130 to be spaced apart from the front surface of optical receptacle 120, and is not adhered to optical receptacle 120. Ferrule 140 and supporting member 130 are adhered to each other between the side surfaces of ferrule 140 and the outer surface of supporting member 130 in the present embodiment. Accordingly, adhesive 10 is disposed between the side surfaces of ferrule 140 and the outer surface of supporting member 130 in the present embodiment as illustrated in FIG. 1A. Note that, "adhesive" as used herein includes both an adhesive before being cured and an adhesive after being cured (cured object).

The shape and the size of ferrule 140 may be any shape and size as long as ferrule 140 can exhibit the aforementioned function. Hollow region 141, twelve first through holes 142, and second through hole 143 are formed in ferrule 140 in the present embodiment. Hollow region 141, first through holes 142, and second through hole 143 communicate with one another. In addition, ferrule 140 includes two optical-receptacle through holes 144.

Optical transmission members 145 are disposed in hollow region 141 and first through holes 142. More specifically, twelve optical transmission members 145 are disposed in hollow region 141, and terminal portions of twelve optical transmission members 145 are disposed respectively in twelve first through holes 142. The shapes and the sizes of hollow region 141 and first through holes 142 may be appropriately determined according to the shape and the size of optical transmission members 145. Second through hole 143 may be used as an injection port for the adhesive for fixing optical transmission members 145 disposed in hollow region 141.

When optical transmission members 145 are disposed in ferrule 140, it is preferable that a distance between the focusing point of the transmission light emitted from second optical surfaces 122 of optical receptacle 120 and end surfaces 145a of optical transmission members 145 be as small as possible. The optical coupling efficiency of end surfaces 145a of optical transmission members 145 and photoelectric conversion elements 112 is the highest when the focusing point of transmission light is located on end surfaces 145a of optical transmission members 145. For example, it is preferable that ferrule 140 be disposed at a position in the direction along the optical axes of second optical surfaces 122 where the optical coupling efficiency of end surfaces 145a of optical transmission members 145 and photoelectric conversion elements 112 at a time when optical transmission members 145 are disposed in ferrule 140 has the maximum value or is lower than the maximum value by at most 1 dB, and it is more preferable that ferrule 140 be disposed at a position where the optical coupling efficiency has the maximum value or is lower than the maximum value by at most 0.1 dB.

The type of optical transmission members 145 is not limited specifically, but may be appropriately selected as needed. Examples of the type of optical transmission members 145 include an optical fiber and an optical waveguide. Optical transmission members 145 are an optical fiber in the present embodiment. The optical fiber may be of a single mode type, or a multiple mode type. The number of optical transmission members 145 is not limited specifically, but may be appropriately selected as needed. Twelve optical fibers are arranged in a row at regular intervals in the present embodiment. Note that, optical transmission members 145 may also be arranged in two or more rows.

### [Method for Producing Optical Module]

A method for producing optical module 100 is not limited specifically. For example, optical module 100 may be produced by a below-described production method.

The method for producing optical module 100 includes a first process step of fixing optical receptacle 120 and supporting member 130 to each other, a second process step of fixing supporting member 130 to which optical receptacle 120 is fixed and substrate 111 to each other, and a third process step of adhering supporting member 130 and ferrule 140 to each other.

### (First Process Step)

Optical receptacle 120 and supporting member 130 are fixed to each other in the first process step. To begin with, optical receptacle 120 and supporting member 130 are prepared. Optical receptacle 120 may be produced, or optical receptacle 120 as a commercial product may also be purchased. In a case where optical receptacle 120 is produced, optical receptacle 120 may be produced by injection molding, for example. Supporting member 130 may also be produced by injection molding, for example.

Prepared optical receptacle 120 is then disposed at a predetermined position in prepared supporting member 130 and is fixed there. The method of fixing optical receptacle 120 and supporting member 130 to each other is not limited specifically. In a case where optical receptacle 120 and supporting member 130 include fitting portions, optical receptacle 120 and supporting member 130 may be joined via the fitting portions to be fixed to each other.

Optical receptacle 120 and supporting member 130 may also be fixed to each other by adhesion with an adhesive. A position where optical receptacle 120 and supporting member 130 are adhered to each other is not limited specifically as long as optical receptacle 120 and supporting member 130 do not hinder the travel of light passing through the optical path between photoelectric conversion elements 112 and optical transmission members 145. For example, the right side surface, left side surface and rear surface of optical receptacle 120 are adhered to the inner surface of supporting member 130. Supporting member 130 includes the positioning part, so that the position where optical receptacle 120 is supported by supporting member 130 may be determined easily at this time.

### (Second Process Step)

In the second process step, supporting member 130 to which optical receptacle 120 is fixed and substrate 111 are fixed to each other, with substrate 111 and optical receptacle 120 being spaced apart from each other. To begin with, photoelectric conversion device 110 including photoelectric conversion elements 112 (light-emitting elements and light-receiving elements) mounted on substrate 111 is prepared. For example, photoelectric conversion device 110 as a commercial product may be purchased. Subsequently, supporting member 130 to which optical receptacle 120 is fixed is disposed on photoelectric conversion device 110 and fixed thereto. More specifically, first optical surfaces 121 of optical receptacle 120 and the photoelectric conversion surfaces of photoelectric conversion elements 112 are aligned to face each other, and supporting member 130 of optical receptacle 120 and substrate 111 of photoelectric conversion device 110 are fixed to each other. Optical receptacle 120 is thus fixed on substrate 111 via supporting member 130 to be spaced apart from substrate 111.

The method of fixing substrate 111 and supporting member 130 to each other is not limited specifically. For example, substrate 111 and supporting member 130 may be fixed to each other by adhesion with an adhesive. A position where substrate 111 and supporting member 130 are adhered to each other is not limited specifically as long as substrate 111 and supporting member 130 do not hinder the travel of light passing through the optical path between photoelectric conversion elements 112 and optical transmission members 145. For example, the surface of substrate 111 and the outer surfaces of right side plate 132 and left side plate 133 of supporting member 130 are adhered to each other.

### (Third Process Step)

Without the front surface of optical receptacle 120 and ferrule 140 being in contact with each other, supporting member 130 and ferrule 140 are adhered to each other without adhering optical receptacle 120 and ferrule 140 to each other in the third process step. To begin with, ferrule 140 is prepared. For example, ferrule 140 as a commercial product may be purchased. Generally, ferrule 140 inside which ends of optical transmission members 145 are fixed is prepared. Subsequently, optical-receptacle through holes 144 of ferrule 140 and ferrule protrusions 124 of optical receptacle 120 are fitted to each other, so as to bring ferrule 140 into contact with supporting member 130.

Shapes for fitting optical receptacle 120 and ferrule 140 to each other (ferrule protrusions 124 and optical-receptacle through holes 144) are formed in optical receptacle 120 and supporting member 130, so that ferrule 140 can be easily aligned to optical receptacle 120 in the in-plane direction of the front surface of optical receptacle 120 at this time. Moreover, ferrule 140 is brought into contact with supporting member 130, so that ferrule 140 can be easily aligned to optical receptacle 120 also in the direction in which second optical surfaces 122 and end surfaces 145a of optical transmission members 145 face each other (direction orthogonal to the front surface of optical receptacle 120).

Furthermore, the rear surface of optical receptacle 120 and the positioning part (stepped surface of the stepped portion of top plate 131) of supporting member 130 are in contact with each other in the present embodiment, so that it is possible to prevent the position of optical receptacle 120 from shifting, when optical-receptacle through holes 144 and ferrule protrusions 124 are fitted to each other.

As described above, ferrule 140 is larger than opening 1341 in the width direction of opening 1341. It is thus possible to prevent the front surface of optical receptacle 120 and ferrule 140 from coming into contact with each other when ferrule 140 is brought into contact with supporting member 130.

Lastly, without the front surface of optical receptacle 120 and ferrule 140 being in contact with each other, ferrule 140 is adhered only to supporting member 130 without adhering ferrule 140 to optical receptacle 120. A position where ferrule 140 and optical receptacle 120 are adhered to each other is not limited specifically as long as ferrule 140 and optical receptacle 120 do not hinder the travel of light passing through the optical path between photoelectric conversion elements 112 and optical transmission members 145. For example, ferrule 140 and optical receptacle 120 may be fixed to each other with an adhesive between the side surfaces of ferrule 140 and the front surface of supporting member 130 (surface of front plate 134) (see FIG. 1A).

Optical module 100 according to the present embodiment can be produced using the method described above. Generally, optical module 100 is designed such that the focusing point of the emitted light from second optical surfaces 122 is located on the front surface of ferrule 140 (end surfaces 145a of optical transmission members 145), but it is preferable to take into consideration a production error of optical module 100. Speaking from a viewpoint of improving the optical coupling efficiency of end surfaces 145a of optical transmission members 145 and photoelectric conversion elements 112, the production error of optical module 100 mainly includes a production error of optical receptacle 120, a production error of supporting member 130, and a production error during assembly of optical receptacle 120 and supporting member 130. Note that, as described above, ferrule 140 can be easily aligned to optical receptacle 120 in the present embodiment, so that the production error during assembly of supporting member 130 and ferrule 140 can be reduced.

Specifically, it is preferable to produce optical module 100 such that shift amount L of the focusing position of the transmission light with respect to end surfaces 145a of optical transmission members 145 in the optical-axis direction of second optical surfaces 122 arising due to the production error of optical module 100 is smaller than a predetermined tolerance width.

Here, the "tolerance width" means a tolerance to a positional shift of components of optical module 100 to be used for maintaining the reduction in optical coupling efficiency of photoelectric conversion elements 112 and end surfaces 145a of optical transmission members 145 within a predetermined range. In addition, the "positional shift" means the size of a shift in relative position between the components in the optical-axis direction of second optical surfaces 122 as measured with reference to a position where the aforementioned optical coupling efficiency has the maximum value.

It is preferable to produce optical module 100 such that the amount of reduction in optical coupling efficiency due to the positional shift is equal to or less than 1 dB, and it is more preferable to produce optical module 100 such that the amount of reduction is equal to or less than 0.1 dB. Hereinafter, a range within which the reduction in optical coupling efficiency described above from the maximum value is maintained at 0.1 dB or less is referred to as "first tolerance width Di," and a range within which the reduction in optical coupling efficiency described above from the maximum value is maintained at 1 dB or less is referred to as "second tolerance width D₂." Shift amount L of the focusing position of the transmission light with respect to end surfaces 145a of optical transmission members 145 is preferably smaller than D₂, and is more preferably smaller than D₁.

Here, a simulation was conducted to investigate a relationship between, on the one hand, the amount of positional shift between the focusing point of the emitted light from second optical surfaces 122 and end surfaces 145a of optical transmission members 145 in the direction along the optical axes of second optical surfaces 122 (direction in which second optical surfaces 122 and end surfaces 145a of optical transmission members 145 face each other), and, on the other hand, the optical coupling efficiency of photoelectric conversion elements 112 and end surfaces 145a of optical transmission members 145. In this simulation, the aforementioned optical coupling efficiency was calculated while changing, in the direction along the optical axes of second optical surfaces 122, the relative position of the focusing point of the light emitted from second optical surfaces 122 with respect to end surfaces 145a of optical transmission members 145.

Note that, the light-emitting elements were the VCSEL, numerical aperture (NA) was 0.25, the diameter of each of the light-emitting surfaces was 10 µm, and the wavelength of emitted light was 850 nm in this simulation. Note also that, optical transmission members 145 were an optical fiber, numerical aperture (NA) was 0.2, and the diameter of each of end surfaces 145a was 50 µm.

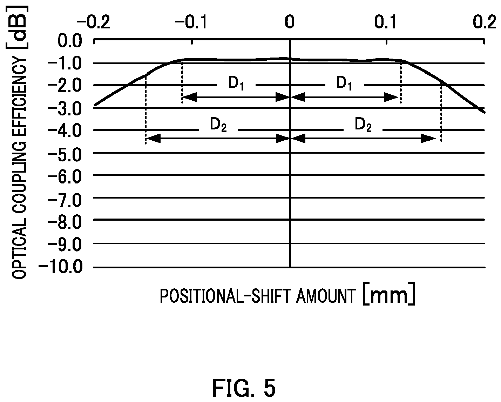

FIG. 5 shows a graph illustrating the relationship between the optical coupling efficiency and the shift amount of the focusing position of light emitted from second optical surfaces 122 with respect to end surfaces 145a of optical transmission members 145s in optical module 100. In FIG. 5, the horizontal axis represents the shift amount (mm) of the focusing position of the light emitted from second optical surfaces 122 with respect to end surfaces 145a of optical transmission members 145, and the vertical axis represents the optical coupling efficiency (dB) of photoelectric conversion elements 112 and end surfaces 145a of optical transmission members 145. Note that, the plus direction along the horizontal axis denotes a direction in which the distance between end surfaces 145a of optical transmission members 145 and second optical surfaces 122 increases, and the minus direction along the horizontal axis denotes a direction in which the distance between end surfaces 145a of optical transmission members 145 and second optical surfaces 122 decreases.

As illustrated in FIG. 5, the present simulation shows that the optical coupling efficiency is substantially constant when the positional-shift amount is approximately 0.12 mm or less, and when the positional-shift amount is greater than approximately 0.12 mm, the optical coupling efficiency decreases as the positional-shift amount increases. The simulation shows that first tolerance width D₁ is approximately 0.10 mm and second tolerance width D₂ is approximately 0.15 mm under the conditions of the present simulation. That is, it is preferable that the optical module in the present simulation be produced such that shift amount L of the focusing position of the transmission light with respect to end surfaces 145a of optical transmission members 145 is approximately 0.15 mm or less, and it is more preferable that the optical module be produced such that shift amount L is approximately 0.10 mm or less.

### [Effect]

As described above, optical receptacle 120 is not in contact with substrate 111 in optical module 100 according to the present embodiment, so that a space is formed between substrate 111 and optical receptacle 120. It is thus possible according to the present embodiment to secure the region for wire bonding and the region for other optical components, electronic components, and/or the like to be disposed, so as to increase the design flexibility of the optical module.

In addition, ferrule 140 is adhered to supporting member 130 but is not adhered to optical receptacle 120 in optical module 100 according to the present embodiment in a state where ferrule 140 is spaced apart from the surface (front surface) of optical receptacle 120 on which second optical surfaces 122 are disposed. Therefore, a stress caused during attachment or detachment of optical transmission members 145 is not directly applied to optical receptacle 120 in optical module 100 when optical transmission members 145 are inserted in or removed from ferrule 140. Further, stresses in a tensile direction of optical transmission members 145 and in a direction in which optical transmission members 145 are pressed against the ferrule are not applied directly to optical receptacle 120 not only during attachment or detachment of optical transmission members 145, but also during use of optical module 100. Accordingly, it is possible to prevent the position of optical receptacle 120 from shifting or optical receptacle 120 from coming off supporting member 130 during attachment or detachment of optical transmission members 145 or during use of optical module 100. It is thus possible to reduce the amount of adhesive used for adhering optical receptacle 120 to supporting member 130. An excessive amount of adhesive may cause optical receptacle 120 to be deformed or the position of optical receptacle 120 to shift by shrinkage of the adhesive, thus resulting in deterioration in optical performance of optical module 100. However, the amount of adhesive can be reduced in optical module 100 according to the present embodiment as described above, so that the deterioration in optical performance of optical module 100 caused by an excessive amount of adhesive can be reduced.

### [Modification]

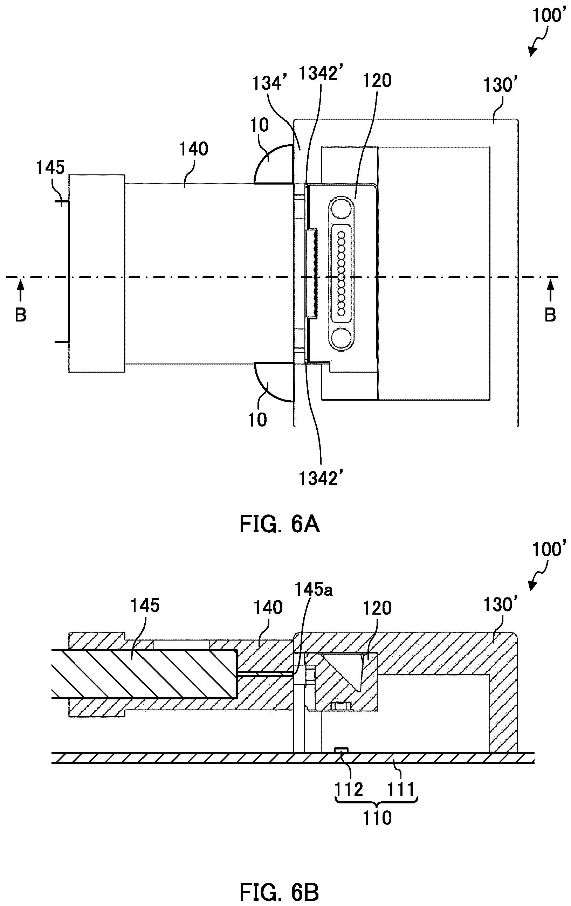

The configuration of the positioning part in supporting member 130 is not limited to the aspect described above. FIGS. 6A and 6B illustrate a configuration of optical module 100' according to Modification 1. FIG. 6A is a bottom view of optical module 100' as seen from the side of substrate 111, and FIG. 6B is a sectional view of optical module 100' taken along in the line B-B in FIG. 6A. Note that, illustration of photoelectric conversion device 110 is omitted in FIG. 6A.

The positioning part in supporting member 130' may be formed by top plate 131 and front plate 134' as illustrated in FIG. 6A. Two cutouts 1342' are formed in the inner side of front plate 134' at opening 1341 of front plate 134' in Modification 1. Two cutouts 1342' are formed at the opposite sides of opening 1341 of front plate 134' so as to face each other. The stepped portion of top plate 131 and cutouts 1342' in front plate 134' may define the position where optical receptacle 120 is supported by supporting member 130' in Modification 1. The position of optical receptacle 120 may thus be determined easily and with high accuracy when optical receptacle 120 and supporting member 130' are fixed to each other.

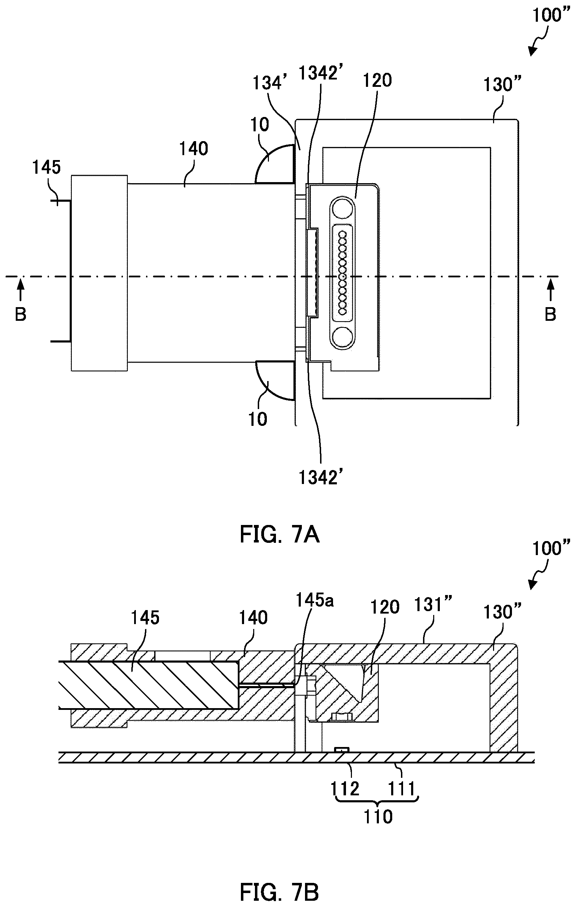

FIGS. 7A and 7B illustrate a configuration of optical module 100" according to Modification 2. FIG. 7A is a bottom view of optical module 100" as seen from the side of substrate 111, and FIG. 7B is a sectional view of optical module 100" taken along in line B-B in FIG. 7A. Note that, illustration of photoelectric conversion device 110 is omitted in FIG. 7A.

The positioning part in supporting member 130" may be formed by front plate 134' as illustrated in FIG. 7A. No stepped portion as described above is formed in top plate 131" as illustrated in FIG. 7B. The position where optical receptacle 120 is supported by supporting member 130" is defined solely by cutouts 1342' in Modification 2. The position of optical receptacle 120 may be determined easily and with high accuracy also in Modification 2 when optical receptacle 120 and supporting member 130" are fixed to each other.

Additionally or alternatively, although the aforementioned embodiment has been described in relation to the case where the positioning part is second recess 1302 formed in supporting member 130, the present invention is not limited to this aspect. For example, the positioning part may also be a protrusion or a fitting portion formed on or in supporting member 130, or may also be a combination of the aforementioned recess, protrusion, and fitting portion.

In a case where the positioning part is the aforementioned protrusion formed on supporting member 130, the position of optical receptacle 120 supported by supporting member 130 may be determined by the surface of the protrusion coming into contact with at least one of the front surface, right side surface, left side surface, and the rear surface of optical receptacle 120.

In a case where the positioning part is the fitting portion formed on or in supporting member 130, a fitting portion corresponding to the fitting portion of supporting member 130 is formed also in optical receptacle 120. Supporting member 130 and optical receptacle 120 are coupled with each other via the fitting portion of supporting member 130 and the fitting portion of optical receptacle 120, so that the position of optical receptacle 120 supported by supporting member 130 may be determined. The positions, shapes, sizes, and numbers of the fitting portions formed on or in optical receptacle 120 and supporting member 130 are not limited specifically as long as these fitting portions can exhibit the aforementioned function. The position, shape, size, and number of the fitting portion formed on or in optical receptacle 120 correspond to the position, shape, size, and number of the fitting portion formed in or on supporting member 130, respectively. Examples of the shapes of the fitting portions of optical receptacle 120 and supporting member 130 include a cylindrical shape, prismatic shape, and through-hole shape.

Additionally or alternatively, although the aforementioned embodiment has been described in relation to optical module 100 including reflective surface 123, the optical module according to the present invention does not need to include a reflective surface.

The present patent application claims the benefit of priority based on Japanese Patent Application No. 2016-230349 filed on November 28, 2016. The disclosure of the specification, drawings and abstract of the Japanese Patent Application is incorporated in the specification of the present application by reference in its entirety.

### Industrial Applicability

The optical module according to the present invention is useful for optical communications using an optical transmission member, for example.

### Reference Signs List

10 Adhesive
100, 100', 100" Optical module
110 Photoelectric conversion device
111 Substrate
112 Photoelectric conversion element
120 Optical receptacle
121 First optical surface
122 Second optical surface
123 Reflective surface
124 Ferrule protrusion
130, 130', 130" Supporting member
1301 First recess
1302 Second recess
131, 131" Top plate
132 Right side plate
133 Left side plate
134, 134' Front plate
1341 Opening
1342' Cutout
135 Rear plate
140 Ferrule
141 Hollow region
142 First through hole
143 Second through hole
144 Optical-receptacle through hole
145 Optical transmission member
145a End surface of optical transmission member

## Claims

1. An optical module for transmitting light to an end surface of an optical transmission member and/or receiving light from the end surface of the optical transmission member, the optical module comprising:
a substrate;
a photoelectric conversion element disposed on the substrate;
an optical receptacle for optically coupling the photoelectric conversion element and the end surface of the optical transmission member;
a supporting member that supports the optical receptacle in a state where the substrate and the optical receptacle are spaced apart from each other; and
a ferrule for holding the optical transmission member,
wherein the optical receptacle includes:
a first optical surface that allows incidence of transmission light emitted by the photoelectric conversion element, or emits, toward the photoelectric conversion element, reception light that has been emitted from the end surface of the optical transmission member and has passed through an inside of the optical receptacle, and
a second optical surface that emits, toward the optical transmission member, the transmission light that has been emitted by the photoelectric conversion element and has passed through the inside of the optical receptacle, or allows incidence of the reception light emitted from the optical transmission member, and
wherein the ferrule is adhered to the supporting member but is not adhered to the optical receptacle, the ferrule being adhered to the supporting member to be spaced apart from a surface of the optical receptacle on which the second optical surface is disposed.

2. The optical module according to claim 1, wherein:
the supporting member includes an opening that is open in a surface of the supporting member facing the ferrule, and
the ferrule is larger than the opening at least in one direction orthogonal to an optical axis of the second optical surface.

3. The optical module according to claim 1 or 2, wherein
the supporting member includes a positioning part for determining a position of the optical receptacle.

4. The optical module according to claim 3, wherein:
the positioning part is a recess formed in the supporting member, and
an inner surface of the recess is in contact with one or both of a front surface of the optical receptacle and a rear surface of the optical receptacle located opposite the front surface in the optical receptacle, the front surface being the surface of the optical receptacle on which the second optical surface is disposed.

5. The optical module according to claim 4, wherein
the inner surface of the recess is further in contact with a right side surface and a left side surface of the optical receptacle.

6. The optical module according to any one of claims 1 to 5, wherein
the ferrule is disposed at a position in a direction along the optical axis of the second optical surface, the position being where optical coupling efficiency of the end surface of the optical transmission member and the photoelectric conversion element at a time when the optical transmission member is disposed in the ferrule has a maximum value or is lower than the maximum value by at most 1 dB.

7. The optical module according to any one of claims 1 to 6, wherein
the optical receptacle further includes a reflective surface that reflects, toward the second optical surface, the transmission light incident on the first optical surface, or reflects, toward the first optical surface, the reception light incident on the second optical surface.

8. A method for producing the optical module according to any one of claims 1 to 7, the method comprising:
fixing the optical receptacle and the supporting member to each other;
fixing the supporting member to which the optical receptacle is fixed and the substrate to each other in a state where the substrate and the optical receptacle are spaced apart from each other; and
adhering the supporting member and the ferrule to each other without adhering the optical receptacle and the ferrule to each other in a state where the surface of the optical receptacle on which the second optical surface is disposed and the ferrule are not in contact with each other.
